**Europäisches Patentamt**

**European Patent Office**

**Office européen des brevets**

(11) Veröffentlichungsnummer: **0 001 788**
**B1**

(12) **EUROPÄISCHE PATENTSCHRIFT**

(45) Veröffentlichungstag der Patentschrift: **15.07.81**

(21) Anmeldenummer: **78101183.8**

(22) Anmeldetag: **20.10.78**

(51) Int. Cl.³: **C 08 L 51/06, A 61 J 1/00, C 08 F 255/02 //(C08F255/02, 220/12)**

(54) Verwendung thermoplastischer Massen auf Basis von chloriertem Polyolefin zur Herstellung medizinischer Geräte und die so hergestellten medizinischen Geräte.

(30) Priorität: **27.10.77 DE 2748198**
**17.12.77 DE 2756451**

(43) Veröffentlichungstag der Anmeldung:
**16.05.79 Patentblatt 79/10**

(45) Bekanntmachung des Hinweises auf die Patenterteilung:
**15.07.81 Patentblatt 81/28**

(84) Benannte Vertragsstaaten:
**BE CH DE FR GB NL SE**

(56) Entgegenhaltungen:
**GB - A - 1 046 575**
**GB - A - 1 434 967**

**CHEMICAL ABSTRACTS, Band 81, Nr. 26, 30.12.1974, Columbus, Ohio, USA, YOSHIMOTO HIROSHI et al. "Graft copolymers of chlorinated polyethylene"**

(73) Patentinhaber: **HOECHST AKTIENGESELLSCHAFT**
**Postfach 80 03 20**
**D-6230 Frankfurt/Main 80 (DE)**

(72) Erfinder: **Fleischer, Dietrich, Dr.**
**Rüdesheimer Strasse 20**
**D-6100 Darmstadt (DE)**
Erfinder: **Sommer, Werner**
**Paul-Lincke-Weg 6**
**D-6232 Bad Soden am Taunus (DE)**
Erfinder: **Brandrup, Johannes, Dr.**
**Am Allersberg 6**
**D-6200 Wiesbaden (DE)**

Courier Press, Leamington Spa, England.

**Verwendung thermoplastischer Massen auf Basis von chloriertem Polyolefin zur Herstellung medizinischer Geräte und die so hergestellten medizinischen Geräte**

Es ist bekannt, Gefässe aus weichmacherhaltigem Polyvinylchlorid für das Sammeln, die Aufbereitung und die Verabreichung parenteraler Flüssigkeiten, z.B. Blut, Blutersatzstoffen, Infusionslösungen und anderen physiologischen Flüssigkeiten zu verwenden. Für diese Anwendung sind hohe Festigkeit bei guter Flexibilität, Sterilisationsbeständigkeit und gute Verschweissbarkeit erforderlich, und um eventuelle Agglutination des Blutes beobachten zu können, ist eine hohe Transparenz erwünscht. Nachteilig ist, dass der in solchen Mischungen enthaltene Weichmacher die Gefahr der Migration oder Extraktion in sich birgt. Darauf wird z.B. in der DE—AS 2,503,182 hingewiesen. Kritisch ist bei weichmacherhaltigem Polyvinylchlorid weiterhin die relativ hohe Wasserdampfdurchlässigkeit, die bei längerer Lagerung von wässrigen Flüssigkeiten in solchen Behältern zu Verdampfungsverlusten führt. Die Kunststoffbehälter müssen deshalb zusätzlich in Metallbehälter eingeschlossen werden.

Migration und Extrahierbarkeit sind bei Polyvinylchlorid-Mischungen, die sogenannte Polymerweichmacher enthalten, wesentlich geringer. Bei der Wasserdampfsterilisation im Autoklaven bei 120°C tritt aber infolge einer gewissen Hydrolisierbarkeit der Polymerweichmacher eine pH-Verschiebung und, infolge Extraktion oxydierbarer Substanzen, eine Erhöhung der Permanganatzahlen im wässrigen Auszug auf. Aus diesem Grund wird in der erwähnten DE—AS 2,503,182 die Verwendung eines bestimmten Polyurethans hoher Reinheit als Weichmacher für PVC vorgeschlagen.

Diese Forderung nach höchster Reinheit macht die Mischungen gemäss dieser DE—AS 2,503,182 jedoch teuer und die Wasserdampfdurchlässigkeit ist auch bei diesen Mischungen höher als erwünscht.

Aufgabe der vorliegenden Erfindung war es daher, eine thermoplastische Masse für die Herstellung medizinischer Geräte bereitzustellen, welche die bekannten Nachteile nicht besitzt, d.h. die insbesondere bei niedriger Wasserdampfdurchlässigkeit, hoher Transparenz, Festigkeit und guter Verschweissbarkeit keine extrahierbaren oder hydrolysierbaren Bestandteile enthält.

Diese Aufgabe wird dadurch gelöst, dass zur Herstellung medizinischer Geräte, die mit parenteralen Flüssigkeiten, z.B. Blut, Blutersatzstoffen, Infusionslösungen und anderen (physiologischen) Flüssigkeiten in Berührung kommen, eine thermoplastische Masse verwendet wird, die aus einer bestimmten Mischung aus einem speziellen chloriertem Polyolefin und Polymeren von Acryl- und/oder Methacrylsäureestern besteht.

Die vorliegende Erfindung betrifft daher die Verwendung einer thermoplastische Masse zur Herstellung von medizinischen Geräten, die mit parenteralen Flüssigkeiten in Berührung kommen, die dadurch gekennzeichnet ist, dass sie aus 50—99,5, vorzugsweise 70—98 Gew.-Teilen chloriertem Polyolefin mit einem Chlorgehalt von 15—45, vorzugsweise 25—40 Gew.-%, und einem mittleren Molekulargewicht von 30 000—300 000, vorzugsweise von 40 000—100 000 (berechnet aus dem Chlorgehalt und dem gel-chromatographisch bestimmten Molekulargewicht des Ausgangspolyäthylens, vergl. Weßlau, Makromolekulare Chemie, *26*, (1958) Seiten 96—101) und aus 0,5—50, vorzugsweise 2—30 Gew.-Teilen Polymeren von Acryl- und/oder Methacrylsäureestern besteht.

Weiterhin hat die Erfindung diese medizinischen Geräte selbst zum Gegenstand.

Als chlorierte Polyolefine eignen sich Chlorierungsprodukte von Polyolefinen, insbesondere von Polyäthylen, Polypropylen und Mischpolymerisaten von Äthylen und Propylen, vor allem Niederdruckpolyäthylen und Mischpolymerisate des Äthylens, mit geringen Anteilen von z.B. 1—5 Mol-% Propen, Buten-(1) oder Hexen-(1).

Die für die Chlorierung eingesetzten Polyolefine haben zweckmässigerweise eine reduzierte spezifische Viskosität (RSV), bestimmt an einer 0,1%igen Lösung in Dekahydronaphthalin bei 135°C nach ISO/R 1191, zwischen 1 und 10, vorzugsweise zwischen 1,2 und 5 dl/g. Werden für die Chlorierung Polyolefine mit höherem RSV-Wert (höherem Molekulargewicht) verwendet, erhält man thermoplastische Massen, die sich nur schwierig verarbeiten lassen, während Polyolefine mit niedrigerem RSV-Wert Massen mit schlechteren mechanischen Eigenschaften ergeben.

Da die Wasserdampfdurchlässigkeit der Massen von der Kristallinität der Chlor-Polyolefine mitbeeinflusst wird, werden vorzugsweise chlorierte Polyolefine mit einem Restkristallgehalt von 1—20, vorzugsweise von 5—15%, bestimmt nach der Differentialthermoanalyse, eingesetzt.

Die Chlorierung der Polyolefine wird vorzugsweise in wässriger Suspension z.B. nach dem Verfahren der DE—AS 1,420,415 durchgeführt.

Die erfindungsgemäas zu verwendende thermoplastische Masse kann durch Mischen der beiden Polymeren hergestellt werden, wobei dies vorzugsweise nach dem Schmelzmischverfahren geschieht. Die Transparenz derartiger Mischungen lässt sich dabei verbessern, wenn ein Polymeres von Acryl- und/oder Methacrylsäureester eingesetzt wird, dessen Brechungsindex dem des Chlorpolyolefins weitgehend angeglichen ist, beispielsweise durch Verwendung eines Mischpolymeren aus zweit entsprechend ausgewählten Acrylaten oder Methacrylaten.

Eine bessere Homogenisierung und damit eine bessere Transparenz erhält man durch Polymerisieren der Acryl- und/oder Methacrylsäureester in Gegenwart des chlorierten Polyolefins. Die Verwendung einer nach diesem Verfahren hergestellten thermoplastischen Masse wird deshalb bevorzugt.

Diese Polymerisation der Acryl- und/oder Methacrylsäureester in Anwesenheit der chlorierten Polyolefine wird vorzugsweise in wässriger Suspension durchgeführt. Dies kann beispielsweise in der Weise geschehen, dass das Chlorpolyolefin in Wasser in Gegenwart der üblichen Suspendiermittel, wie teilverseiftes Polyvinylacetat, Alkylcellulosen, wie Methylcellulose, Hydroxyalkylcellulosen, wie Hydroxypropylcellulose, Alkoxyalkylcellulosen, wie Methyl-oxyäthylcellulose oder Gelatine suspendiert wird, das (oder die) Monomere(n) dann zugegeben wird (werden) und daraufhin das gesamte System zur Anquellung des Chlorpolyolefins in dem Monomeren oder Monomerengemisch bei Raumtemperatur oder schwach erhöhter Temperatur gerührt wird. Anschliessend wird der radikalbildende Initiator und gegebenenfalls ein Molekulargewichtsregler zugegeben und auf die Polymerisationstemperatur, die im allgemeinen 30° bis 120°C, vorzugsweise 40° bis 100°C beträgt, erwärmt. Alternativ ist es auch möglich, das Chlorpolyolefin zunächst in dem Monomeren bzw. Monomerengemisch anzuquellen und/oder aufzulösen, diese Dispersion bzw. Lösung unter Zugabe des Suspendiermittels in Wasser zu dispersieren und dann wie vorstehend zu verfahren.

Als Radikale bildende Initiatoren kommen die hierfür üblichen Starter in Frage, z.B. Peroxide, wie Benzoylperoxid, Lauroylperoxid, Perester wie tert. Butylperoxybenzoat oder tert. Butylperpivalat, Percarbonate, wie Isopropylperoxydicarbonat, Azoverbindungen wie Azobisisobutyronitril und dergleichen sowie entsprechende Gemische in Frage. Die Menge an Initiator beträgt in der Regel etwa 0,1 bis 3 Gew.-%, bezogen auf Monomere. Sie hängt naturgemäss von der Wirksamkeit des Initiators, der Polymerisationstemperatur etc. ab.

Als Molekulargewichtsregler können eingesetzt werden: längerkettige Merkaptane, wie Dodecylmerkaptan, dimerisiertes $\alpha$-Methylstyrol, halogenierte Kohlenwasserstoffe, Aldehyde, Ketone etc.

Es ist grundsätzlich auch möglich, obige Polymerisation, die zu einem gewissen Grade auch eine Propfung des oder der Monomeren auf dem chlorierten Polyolefin zur Folge hat, so dass also Chlorpolyolefin, Polymer von Acryl- und/oder Methacrylsäureester und Propfpolymere dieser Ester auf das Chlorpolyolefin nebeneinander vorliegen, auch nach der Lösungs- oder Massetechnik durchzuführen, wenngleich dies im vorliegenden Fall zumeist keine Vorteile bietet.

Je nach Verwendungszweck können die Eigenschaften der erfindungsgemässen thermoplastischen Masse durch Variation des Gehalts an polymeren Acryl- und/oder Methacrylsäureestern, innerhalb des beanspruchten Bereichs, optimiert werden. Die Elastizität steigt mit einer Erhöhung des Chlorpolyolefin-Gehaltes, während Steifigkeit (Härte) und Transparenz mit dem Gehalt an Polyacryl- und/oder Methacrylsäureester steigen.

Als Acryl- bzw. Methacrylsäureester eignen sich vor allem solche, deren Alkoholkomponente 1 bis 6 C-Atome enthalten, da deren Polymerisate mit den Chlorpolyolefinen gut verträglich sind und nicht zu Trübungen führen. Die Alkoholkomponente kann durch Hydroxylgruppen oder die Furangruppe substituiert sein. Es können einzelne Ester oder Gemische mehrerer Ester polymerisiert werden. Als Beispiele von Estern, die allein oder zusammen in Gegenwart von Chlorpolyolefinen polymerisiert werden können, seinen genannt:

Methylmethacrylat, Hydroxyäthylmethacrylat, Hydroxypropylmethacylat, Furfurylmethacrylat, Äthylacrylat, Isopropylacrylat und Butylacrylat.

Gegebenenfalls können die erfindungsgemäss eingesetzten Acryl- und/oder Methacrylsäureester auch weitere Monomere in kleinen Mengen enthalten, sofern dadurch die erfindungsgemäss angestrebten Eigenschaften, insbesondere die niedrige Wasserdampfdurchlässigkeit und die hohe Transparenz nicht wesentlich beeinträchigt werden. Beispiele für derartige Monomere sind:

Acrylnitril, Methacrylnitril, Methacrylamid, Vinylester, insbesondere von 2 bis 12 C-Atome enthaltenden gesättigten Carbonsäuren wie vor allem Vinylacetat und Vinylpropionat, weiterhin N-Vinyllactame wie N-Vinylpyrrolidon; ausserdem copolymerisierbare ungesättigte Kohlenwasserstoff wie Äthylen, Propylen oder Styrol und dergleichen. Unter kleinen Mengen sind zumeist solche von etwa bis 10 Gew.-%, vorzugsweise bis 5 Gew.-%, zu verstehen, wenngleich bei manchen Monomeren auch grössere Mengen ohne wesentliche Beeinträchtigung obiger Eigenschaften zugegen sein können, was durch einfache Versuche leicht zu ermitteln ist.

Der Begriff "Acryl- und/oder Methacrylsäureester" soll daher hier in der Weise verstanden werden, dass er auch Gemische mit derartigen Monomeren in kleinen Mengen mit umfasst.

Die erfindungsgemässen thermoplastischen Massen können zur Herstellung der verschiedensten medizinischen Geräte oder Geräteteile, die mit parenteralen Flüssigkeiten direkt oder indirekt in Berührung kommen, z.B. Blutbeutel, flexible Behälter für Infusionslösungen, Infusionsschläuche, Absaugschläuche und Katheter verwendet werden. Unter parenteralen Flüssigkeiten werden sowohl Blut und Blutserum als auch alle anderen injizierbaren Lösungen für medizinische Zwecke wie Lösungen von Blutersatzmitteln etc. verstanden.

Für eine gute Lagerungsstabilität medizinischer Behälter ist es erfoderlich, dass kein oder nur ein geringer Gasaustausch zwischen geschlossenem Behälter und Umgebung, wie z.B. Verdunsten der im Gefäss vorhandenen Flüssigkeit oder Sauerstoffaufnahme von aussen stattfindet. Ausserdem dürfen keine, die parenterale Flüssigkeit abbauenden Mikroorganismen eindringen. Bei den erfindungsgemässen thermoplastischen Massen sind vorstehende Voraussetzungen erfüllt; ausserdem ist die Wasserdampfdurchlässigkeit wesentlich geringer als bei weichmacherhaltigem Polyvinylchlorid. Sie ist

**0 001 788**

jedoch gross genug, um zu verhindern, dass bei der Sterilisation mit Wasserdampf eine Trübung auftritt, die ansonsten nur sehr langsam, z.T. erst nach Tagen, wieder zurückgeht. Die Wasserdampfdurchlässigkeit kann im übrigen durch Wahl des monomeren Esters leicht optimiert werden; so steigt sie z.B. durch teilweisen Ersatz von Methylmethacrylat durch Hydroxypropylmethacrylat.

Die erfindungsgemässe thermoplastische Masse kann auf üblichen Verarbeitungsmaschinen wie Extrudern oder Kalandern nach üblichen Verfahren zu den gewünschten Geräten verformt werden. Um einen Abbau während der Verarbeitung zu vermeiden, müssen Stabilisatoren zugesetzt werden. Dabei sollten nur physiologisch einwandfreie Stabilisatoren, wie z.B. fettsaure Salze von Calcium, Magnesium, Aluminium und Zink, organische Phosphite, aliphatische Epoxide, mehrwertige Alkohole und phenolische Antioxydantien, verwendet werden. Besonders bewährt hat sich eine Stabilisatorkombination aus 1—3 Gew.-% Calcium-Aluminium-Stearat, 0,5—1 Gew.-% eines sekundären oder tert. organischen Phosphits, 1—3 Gew.-% eines aliphatischen Epoxids und 0,05—10 Gew.-% eines phenolischen Antioxydants, bezogen auf die thermoplastische Masse. Ausserdem können die üblichen Lichtstabilisatoren, Gleitmittel, Pigmente und Füllstoffe, z.B. Bariumsulfat als Kontrastmittel für röntgenographische Zwecke zugesetzt werden. Die Zusätze können während der Herstellung der thermoplastischen Masse oder nachträglich zugegeben werden.

Zumeist ist die gute mechanische Festigkeit der aus den erfindungsgemässen Formmassen hergestellten Formkörpern für die vorliegenden Anwendungszwecke ausreichend. In manchen Fällen kann es jedoch zweckmässig sein, die mechanische Festigkeit durch Einarbeiten von Stützgeweben aus anorganischem oder organischem Material, wie Glasfasern oder Kunststoff-Fasern, beispielsweise aus Polyester oder Polyamid, zu erhöhen. Ausserdem ist es zu diesem Zwecke auch möglich, Verbundfolien einzusetzen, bei denen die innere Folie die mit den parenteralen Flüssigkeiten in Berührung kommt, aus den erfindungsgemässen Formmassen besteht (also gewissermassen als Futter wirkt) und die äussere Folie aus mechanisch besonders starkem, und gleichfalls möglichst transparentem Material aufgebaut ist. Die Wasserdampfdurchlässigkeit dieser ausseren Stützfolie kann demgegenüber relativ hoch sein, da ja die innere Folie nur wenig durchlässig ist.

Beispiel 1

81 Gewichtsteile eines feinkörnigen chlorierten Polyäthylens mit einem Chlorgehalt von 40 Gew.-% und einer Restkristallinität von 4% (bestimmt mit der Differentialthermoanalyse), das durch Chlorieren eines Niederdruckpolyäthylens mit einem RSV-Wert von 2,3 dl/g (gemessen in 0,1%iger Lösung in Decahydronaphthalin bei 135°C) hergestellt war, werden mit 160 Teilen Wasser und 0,2 Teilen eines teilverseiften Polyvinylacetats (Viskosität = 2 mPa.s in 2%iger wässriger Lösung, Acetylgehalt = 42%) in einem nichtrostenden Stahlkessel mit 40 l Inhalt mit einem Anker-Rührer suspendiert. Unter Sauerstoffausschluss werden 19 Gew.-Teile Methylmethacrylat eingedrückt und unter Rühren bei Raumtemperatur das chlorierte Polyäthylen in dem Monomeren angequollen. Darauf werden 0,06 Gew.-Teile tert.-Butylperpivalat zugegeben und die Polymerisation durch Aufheizen des Kesselinhaltes auf 90°C gestartet. Nach 2 Stunden wird gekühlt und das feinkörnige Produkt abgelassen, gewaschen und getrocknet. Die Ausbeute, bezogen auf das eingesetzte Monomere, beträgt 99,9%.

Das Produkt wird mit 1 Gew.-% Ca/Al-stearat, 0,5 Gew.-% Trisnonylphenyl-phosphit, 3 Gew.-% epoxydiertes Sojabohnenöl und 0,1 Gew.-% Tetrakis-[methylen-3-(3′,5′-di-tert.-butyl-4′-hydroxyphenyl)-propionat]-methan (Irganox[R] 1010) stabilisiert.

Auf einer Mischwalze wird aus diesem Polymerisat bei 175°C ein Walzfell bereitet und daraus 400 μm dicke Folien gepresst. Die Klarheit der so hergestellten Folie (Streuung 21%) is wesentlich besser als diejenige einer entsprechenden Folie aus dem Ausgangs-Chlorpolyäthylen (Streuung 55%).

Die Folien wurden im Autoklaven bei 120°C sterilisiert und der wässrige Extrakt gemäss DIN 58 361/4 Blutbeutelprüfung) geprüft. Das Ergebnis, im Vergleich zu einer dem Stand der Technik entsprechenden Folie aus Weich-PVC (70% PVC + 30% Dioctylphthalat) zeigt Tabelle 1.

Wie aus Tabelle 1 ersichtlich, werden die einzuhaltenden Werte bei allen Prüfungen weit unterschritten und sind zum Teil auch besser als bei Weich-PVC.

4

1) Chlorpolyäthylen
2) Methylmethacrylat
3) Dioctylphthalat

TABELLE 1

| Blutbeutelprüfung nach DIN 58 361/4 | Höchstzulässige Werte | Beispiel 1 81 % CPE[1]) / 19 % MAA[2]) | Vergleich 70 % PVC / 30 % DOP[3]) |
|---|---|---|---|
| Aussehen der Prüflösung | klar, farblos | klar, farblos | klar, farblos |
| Verschiebung des pH-Wertes Verbrauch bei der Titration /250 ml | $\leq$ 10 ml 0,01 n-HCl $\leq$ 10 ml 0,01 n-NaOH | 0,0 ml 0,0 ml | — 3 — 5 ml |
| Eindampfrückstand / 250 ml | $\leq$ 12,5 mg | 1,7 mg | 3 — 10 mg |
| UV-Absorption im Bereich von 230 — 360 nm | $\leq$ 0,2 | bei 230 nm 0,090 | bei 230 nm 0,1 — 0,25 |
| Chlorionen / 250 ml | $\leq$ 1,0 mg Cl' | Spur | Spur |
| Sulfationen / 250 ml | $\leq$ 2,5 mg $SO_4''$ | nicht nachweisbar | nicht nachweisbar |
| Ammoniumionen / 250 ml | $\leq$ 0,5 mg $NH_4+$ | Spur | Spur |
| Schaumbildung | nicht nachweisbar | nicht nachweisbar | nicht nachweisbar |
| Oxidierende Substanzen Verbrauch an 0,01 n-$KMnO_4$-Lsg. / 250 ml | $\leq$ 25,0 ml | 3,8 ml | 10 — 20 ml |
| Schwermetalle / 250 ml | $\leq$ 0,5 mg $Pb^{++}$ | nicht nachweisbar | nicht nachweisbar |

# 0001 788

Die Beispiele 2 bis 16 zeigen weitere Eigenschaften der erfindungsgemässen thermoplastischen Massen, die für ihre Verwendung für medizinische Geräte, die mit parenteralen Flüssigkeiten in Berührung kommen, wesentlich sind.

### Beispiele 2 und 3

Beispiel 1 wird unter Verwendung eines chlorierten Polyäthylens mit einem Chlorgehalt von 34 Gew.-% und einer Restkristallinität von 10%, das durch Chlorieren eines Niederdruckpolyäthylens mit einem RSV-Wert von 1,5 dl/g hergestellt war, mit wechselnden Mengen Methylmethacrylat (MMA) wiederholt. Aus den erhaltenen Polymerisaten werden Kalanderfolien von 400 $\mu$m Dicke zur Prüfung von Reissfestigkeit und -dehnung und 3 mm Pressplatten zur Bestimmung der Kugeldruckhärte hergestellt. Wie aus Tabelle 2 ersichtlich, hängt die Härte der thermoplastischen Masse vom Gehalt an Methylmethacrylat ab.

### TABELLE 2

| Beispiel | Kugeldruckharte N/mm² | Reissdehnung % | Reissfestigkeit N/mm² |
|---|---|---|---|
| 2: 85% CPE/15% MMA | 16 | 742 | 10,9 |
| 3: 80% CPE/20% MMA | 32 | 534 | 12,7 |

### Beispiele 4 und 5

Beispiel 2 und 3 werden wiederholt, wobei anstelle von Methylmethylacrylat Hydroxy-propylmethacrylat (HPMA) eingesetzt wird. Tabelle 3 zeigt die Wasserdampfdurchlässigkeit von 400 $\mu$m dicken Folien der verschiedenen Proben im Vergleich zu einer Weich-PVC-Folie. Durch Einbau von Hydroxylgruppen in das Polymerisat nimmt die Wasserdampfdurchlässigkeit zu und kann somit auf einen gewünschten Grad eingestellt werden.

### TABELLE 3

| Beispiel | | Wasserdampfdurchlässigkeit g/m² . 24 h |
|---|---|---|
| 2: | 80% CPE/20% MMA | 0,33 |
| 4: | 85% CPE/15% HPMA | 1,42 |
| 5: | 80% CPE/20% HPMA | 2,03 |
| Vergleich: | 70% PVC/30% DOP | 2,52 |

### Beispiele 6—8

Entsprechend Beispiel 1 werden unterschiedliche Mengen Methylmethacrylat (MMA) in Gegenwart eines chlorierten Polyäthylens (CPE) mit einem Chlorgehalt von 38 Gew.-%, das durch Chlorieren eines Niederdruckpolyäthylens mit einem RSV-Wert von 1,5 dl/g hergestellt war, polymerisiert. Aus den so gewonnen Produkten und aus dem Ausgangs-Chlorpolyäthylen wurden 400 $\mu$m dicke Kalanderfolien hergestellt und die Transparenz und Streuung mit der von Weich-PVC-Folien verglichen. Das Ergebnis zeigt Tabelle 4. Die Klarheit der Folie wird mit steigendem Methylmethacrylat-Anteil besser und erreicht bei 15% MMA fast den Wert der Weich-PVC-Folie.

TABELLE 4

| Beispiel | | Transparenz % | Streuung % |
|---|---|---|---|
| 6: Vergleich: | CPE | 89 | 51 |
| 7: | 90% CPE/10/ MMA | 90 | 23 |
| 8: | 85% CPE/15% MMA | 90 | 16 |
| Vergleich: | 70% PVC/30% DOP | 92 | 10 |

### Beispiel 9

Beispiel 2 wird wiederholt, aber nach Abkühlen der wässrigen Flotte auf 50—60°C werden als Stabilisatoren 1 Gew.-% Ca/Al-stearat, 0.5 Gew.-% Distearyl-pentaerythrit-diphosphit, 0,25 Gew.-% Tetrakis-[methylen-3-(3'5'-di-tert.-butyl-4'-hydroxyphenyl)-propionat]-methan und 3 Gew.-% eines festen epoxydierten $\alpha$-Olefins mit 26—28 C-Atomen unter 1/2 — 1stündigem Rühren zugegeben. Nach üblicher Aufarbeitung hat das Polymerisat gleiche Thermostabilität und rheologische Eigenschaften wie bei nachträglicher Stabilisierung des Pulvers.

### Beispiele 10—11

Beispiel 5 wird wiederholt, wobei anstelle von reinem Hydroxy-propylmethacrylat (HPMA) ein Gemisch aus Hydroxypropylmethacrylat und Methylmethacrylat (MMA) in Gegenwart des chlorierten Polyäthylens polymerisiert wird. Tabelle 5 zeigt die Wasserdampfdurchlässigkeit der so hergestellten Produkte im Vergleich zu den Beispielen 2 und 5. Durch Variation des Monomerenverhältnisses kann die Wasserdampfdurchlässigkeit für die jeweilige Anwendung optimiert werden.

TABELLE 5

| Beispiel | | Wasserdampfdurchlässigkeit einer 400 $\mu$m dicken Folie $g/m^2 \cdot 24$ h |
|---|---|---|
| 2: | 80% CPE/20% MMA | 0,33 |
| 10: | 80% CPE/18% MMA/2% HPMA | 0,51 |
| 11: | 80% CPE/10% MMA/10% HPMA | 1,14 |
| 5: | 80% CPE/20% HPMA | 2,03 |

### Beispiele 12—14

Beispiel 5 wird wiederholt, wobei ein Gemisch aus Äthylacrylat (AA) und Methylmethacrylat in Gegenwart des chlorierten Polyäthylens polymerisiert wird. Die Ausbeute, bezogen auf das Monomerengemisch und die Lichtstreuung zeigt Tabelle 6:

TABELLE 6

| Beispiel | | Ausbeute % | Streuung % |
|---|---|---|---|
| 12: | 80% CPE/18% MMA/2% AA | 99 | 19 |
| 13: | 80% CPE/16% MMA/4% AA | 97 | 21 |
| 14: | 80% CPE/14% MMA/6% AA | 96 | 22 |

### Beispiele 15—16

80 Teile eines chlorierten Polyäthylens mit einem Chlorgehalt von 34% und einem Berechnungsindex $n_D$ von 1.522, hergestellt durch Chlorieren eines Niederdruckpolyäthylens mit einem RSV-Wert von 1,5 dl/g, werden auf einer Mischwalze bei 175°C mit 20 Teilen Polymethylmethacrylat ($n_D$ = 1.492, gewichtsmittleres Molekulargewicht: 100 000) vermischt und zu 400 $\mu$m dicken Folien verpresst. Man erhält eine milchig trübe Folie, deren mechanische und physiologische Eigenschaften dem Propfpolymerisat der gleichen Zusammensetzung entsprechen. Diese Mischung kann erfindungsgemäss eingesetzt werden, wenn Transparenz nicht erfoderlich ist. Ersetzt man das Polymethylmethacrylat durch ein Mischpolymer, dessen Berechnungsindex dem des chlorierten Polyäthylens angeglichen ist, so erhält man transparente Folien. Um dies zu zeigen, wird ein Mischpolymerisat aus 70 Gew.-% Methylmethacrylat und 30 Gew.-% Furfurylmethacrylat (FMA) ($n_D$ des Homopolymerisats: 1.5381) mit dem gleichen chlorierten Polyäthylen auf der Mischwalze vermischt. Das Ergebnis dieser Versuche zeigt Tabelle 7:

TABELLE 7

| Beispiel | Mischung | Streuung % |
|---|---|---|
| 15: | 80% CPE/20% PMMA | 100 |
| 16: | 80% CPE/20% Mipo aus 70% MMA und 30% FMA | 28 |

### Beispiel 17

97 Gew.-Teile eines feinkörnigen chlorierten Polyäthylens mit einem Chlorgehalt von 36 Gew.-% und einer Restkristallinität von 8% (bestimmt mit der Differentialthermoanalyse), das durch Chlorieren eines Niederdruckpolyäthylens mit einem RSV-Wert von 1,5 dl/g (gemessen in 0,1%iger Lösung in Decahydronaphthalin bei 135°C) hergestellt war, werden mit 160 Teilen Wasser und 0,05 Teilen eines teilverseiften Polyvinylacetats (Viscosität = 2 mPa.s in 2%iger wässriger Lösung, Acetylgehalt = 42%) in einem nichtrostenden Stahlkessel mit 40 l Inhalt mit einem Anker-Rührer suspendiert. Unter Sauerstoffausschluss werden 3 Gew.-Teile Methylmethacrylat eingedrückt und unter Rühren bei Raumtemperatur das chlorierte Polyäthylen in dem Monomeren angequollen. Darauf werden 0,02 Gew.-Teile tert.-Butylperpivalat zugegeben und die Polymerisation durch Aufheizen des Kesselinhaltes auf 90°C gestartet. Nach 2 Stunden wird gekühlt und das feinkörnige Produkt abgelassen, gewaschen und getrocknet. Die Ausbeute, bezogen auf das eingesetzte Monomere, beträgt 99,9%.

Das Produkt wird mit 1 Gew.-% Ca/Al-stearat, 0,5 Gew.-% Trisnonphenyl-phosphit, 3 Gew.-% epoxydiertes Sojabohnenöl und 0,1 Gew.-% Tetrakis-[methylen-3-(3',5'-di-tert.-butyl-4'-hydroxyphenyl)-propionat]-methan (Irganox[R] 1010) stabilisiert.

Auf einer Mischwalze wird aus diesem Polymerisat bei 175°C ein Walzfell bereitet und daraus 400 $\mu$m dicke Folien gepresst. Die so hergestellte Folie besitzt folgende für die erfindungsgemässe Verwendung bedeutsame Eigenschaften: Streuung: 25%, Transparenz: 89: MFI (150°/30 kp): 130 (g/10'), Oberflächenhärte (Shore A): 67°, Reissfestigkeit: 8,5 N/mm², Kerbzähigkeit: 12 (Mnn/mm²), Reissdehnung 490%.

**Patentansprüche**

1. Verwendung einer thermoplastischen Masse zur Herstellung von medizinischen Geräten, die mit parenteralen Flüssigkeiten in Berührung kommen, dadurch gekennzeichnet, daß die thermoplastische Masse aus 50—99,5 Gewichtsteilen chloriertem Polyolefin mit einem Chlorgehalt von 15—45 Gew.-% und einem mittleren Molekulargewicht von 30 000—300 000 und aus 0,5—50 Gewichtsteilen Polymeren von Acryl- und/oder Methacrylsäureestern besteht.

2. Verwendung nach Anspruch 1, dadurch gekennzeichnet, daß die thermoplastische Masse durch Polymerisation der Acryl- und/oder Methacrylsäureester in Gegenwart die chlorierten Polyolefins hergestellt worden ist.

3. Verwendung nach Anspruch 1 und 2, dadurch gekennzeichnet, daß die thermoplastische Masse durch Polymerisation von Mischungen von Acryl- und/oder Methacrylsäureestern in Gegenwart des chlorierten Polyolefins hergestellt worden ist.

4. Verwendung nach Anspruch 1 bis 3, dadurch gekennzeichnet, daß zur Herstellung der thermoplastischen Masse als Methacrylsäureester ein Methacrylsäuremethylester oder ein Methacrylsäurehydroxypropylester eingesetzt worden ist.

5. Verwendung nach Anspruch 1 bis 4, dadurch gekennzeichnet daß zur Herstellung der thermoplastischen Masse als chloriertes Polyolefin ein chloriertes Niederdruckpolyäthylen mit einer reduzierten spezifischen Viskosität, bestimmt an einer 0,1%igen Lösung in Dekahydronaphthalin bei 135°C zwischen 1 und 10 dl/g eingesetzt worden ist.

6. Verwendung nach Anspruch 1 bis 5, dadurch gekennzeichnet, daß die thermoplastische Masse mit 1—3 Gew.-% Ca/Al-Stearat, 0,5—1 Gew.-% eines sekundären oder tertiären organischen Phosphits, 1—3 Gew.-% eines aliphatischen Epoxids und 0,05—1,0 Gew.-% eines phenolischen Antioxydants stabilisiert worden ist.

7. Verwendung nach Anspruch 1 bis 6, dadurch gekennzeichnet, daß die thermoplastische Masse zusätzlich Pigmente und/oder Füllstoffe enthält.

8. Verwendung nach Anspruch 1 bis 7, dadurch gekennzeichnet, daß die medizinischen Geräte Behälter für Blut oder Blutersatzstoffe darstellen.

9. Verwendung nach Anspruch 1 bis 7, dadurch gekennzeichnet, daß die medizinischen Geräte Infusionseinrichtungen oder Teile davon sind.

10. Medizinische Geräte, die mit parenteralen Flüssigkeiten in Berührung kommen, insbesondere Beutel für derartige Flüssigkeiten, dadurch gekennzeichnet, daß sie unter Verwendung von einer thermoplastischen Masse wie in Anspruch 1 bis 7 hergestellt werden.

**Revendications**

1. Utilisation d'une matière thermoplastique pour la fabrication d'ustensiles médicaux devant entrer en contact avec des liquides parentéraux, utilisation caractérisée en ce que la matière thermoplastique est constituée de 50 à 99,5% en poids d'une polyoléfine chlorée ayant une teneur en chlore de 15 à 45% en poids et un poids moléculaire moyen de 30 000 à 300 000, et de 0,5 à 50 parties en poids de polymères d'esters acryliques et/ou méthacryliques.

2. Utilisation selon la revendication 1, caractérisée en ce que la matière thermoplastique a été préparée par polymérisation des esters acryliques et/ou méthacryliques en présence de la polyoléfine chlorée.

3. Utilisation selon l'une des revendications 1 et 2, caractérisée en ce que la matière thermoplastique a été préparée par polymérisation de mélanges d'esters acryliques et/ou méthacryliques en présence de la polyoléfine chlorée.

4. Utilisation selon l'une quelconque des revendications 1 à 3, caractérisée en ce qu'on a utilisé comme ester méthacrylique, pour préparer la matière thermoplastique, un méthacrylate de méthyle ou un méthacrylate d'hydroxypropyle.

5. Utilisation selon l'une quelconque des revendications 1 à 4, caractérisée en ce qu'on a utilisé pour la préparation de la matière thermoplastique, comme polyoléfine chlorée, un polyéthylène basse pression chloré ayant une viscosité spécifique réduite, déterminée à 135°C sur une solution à 0,1% dans le décahydronaphtalène, comprise entre 1 et 10 dl/g.

6. Utilisation selon l'une quelconque des revendications 1 à 5, caractérisée en ce que la matière thermoplastique a été stabilisée avec de 1 à 3% en poids de stéarate de Ca/Al, de 0,5 à 1% en poids d'un phosphite organique secondaire ou tertiaire, de 1 à 3% en poids d'un époxyde aliphatique et de 0,05 à 1,0% en poids d'un anti-oxydant phénolique.

7. Utilisation selon l'une quelconque des revendications 1 à 6, caractérisée en ce que la matière thermoplastique contient en outre des pigments et/ou des charges.

8. Utilisation selon l'une quelconque des revendications 1 à 7, caractérisée en ce que les ustensiles médicaux sont des récipients devant contenir du sang ou des substituts du sang.

9. Utilisation selon l'une quelconque des revendications 1 à 7, caractérisée en ce que les ustensiles médicaux sont des appareils pour perfusion ou des parties d'appareils de ce genre.

10. Ustensiles médicaux devant entrer en contact des liquides parentéraux, plus particulièrement sachets pour liquides de ce genre, caractérisés en ce qu'ils ont été fabriqués avec une matière thermoplastique selon l'une quelconque des revendications 1 à 7.

**Claims**

1. Method of using a thermoplastic composition for the manufacture of medical apparatuses and instruments, which come into contact with parenteral liquids, characterized by said thermoplastic composition consisting of from 50 to 99.5 parts by weight of chlorinated polyolefin having a chlorine content of from 15 to 45% by weight and an average molecular weight of from 30,000 to 300,000 and of from 0.5 to 50 parts by weight of polymers of acrylic and/or methacrylic acid esters.

2. Method of using the thermoplastic composition as claimed in claim 1, characterized by the fact that it is obtained by polymerization of the acrylic and/or methacrylic acid esters in the presence of the chlorinated polyolefin.

3. Method of using the thermoplastic composition as claimed in claims 1 and 2, characterized by the fact that it is obtained by polymerization mixtures of the acrylic and/or methoacrylic acid esters in the presence of the chlorinated polyolefin.

4. Method of using the thermoplastic composition as claimed in claims 1 and 3, characterized by the fact that a methacrylic acid methyl ester or a methacrylic acid hydroxylpropyl ester is used as methacrylic acid ester.

5. Method of using the thermoplastic composition as claimed in claims 1 to 4, characterized by the fact that the chlorinated polyolefin is a chlorinated low pressure polyethylene having a reduced specific viscosity, determined in a 0.1% solution in decahydronaphthalene at 135°C, of from 1 to 10 dl/g.

6. Method of using the thermoplastic composition as claimed in claims 1 to 5, characterized by the fact that the thermoplastic composition is stabilized with 1 to 3 weight % of Ca/Al stearate, 0.5 to 1 weight % of a secondary or tertiary organic phosphite, 1 to 3 weight % of an aliphatic epoxide and 0.05 to 1.0 weight % of a phenolic antioxidant.

7. Method of using the thermoplastic composition as claimed in claims 1 to 6, characterized by the fact that the thermoplastic composition contains additionally pigments and/or fillers.

8. Method of using the thermoplastic composition as claimed in claims 1 to 7, characterized by the fact that the medical apparatuses and instruments are containers for blood or blood substitutes.

9. Method of using the thermoplastic composition as claimed in claims 1 to 7 characterized by the fact that the medical apparatuses and instruments are infusion devices or parts thereof.

10. Medical apparatuses and instruments, which come into contact with parenteral liquids, especially bags, characterized by the fact that they are manufactured by using the thermoplastic composition according to claims 1 to 7.